# EUROPÄISCHE PATENTSCHRIFT

(11) **EP 0 298 272 B1**
(45) Veröffentlichungstag und Bekanntmachung des Hinweises auf die Patenterteilung: **18.11.1993**
(21) Anmeldenummer: 88109262.1
(22) Anmeldetag: 10.06.1988
(51) Int. Cl.: G05D 16/06

(54) **Druckregler für Gase**
Gas pressure regulator
Régulateur de température pour gaz

(30) Priorität: 09.07.1987 DE 3722692
(43) Veröffentlichungstag der Anmeldung: 11.01.1989
(73) Patentinhaber: MESSER GRIESHEIM GMBH, D-60314 Frankfurt (DE)
(72) Erfinder: Linz, Dieter, D-6232 Bad Soden (DE); Elsner, Peter, D-6000 Frankfurt/Main 17 (DE)

(56) Entgegenhaltungen:
- EP-A- 0 200 543
- DE-A- 1 550 149
- GB-A- 821 696
- LU-A- 60 395
- US-A- 3 538 930

## Beschreibung

Die Erfindung betrifft einen Druckregler für Gase nach dem Oberbegriff des Anspruches 1.

In der Analysenmeßtechnik, insbesondere bei Umweltschutzmessungen in Emissionsmeßanlagen wird die zu analysierende Luftprobe vor Ort gemessen und in einer hierzu vorgesehenen Einrichtung analysiert (Druckschrift: Mannesmann Illustrierte, 7-8/86, Mannesmann-Techniken für den Umweltschutz (5), "Keine Schlupflöcher für Emissionen").

In einer Emissionsmeßanlage werden in unregelmäßigen und teilweise großen Zeitabständen die Analysen der Luftzusammensetzungen automatisch durchgeführt. Dabei muß vor jeder Messung das Meßgerät kalibriert werden.

Hierzu wird aus einer Gasflasche das jeweilige Eich- bzw. Prüfgas entnommen und über einen Druckregler dem Meßgerät zugeleitet. Der Druckregler arbeitet in der Regel nur einmal täglich und steht während des restlichen Zeitraums ständig unter Druck. Während dieser Zeit darf kein unzulässig hoher Druckanstieg bzw. Druckabfall erfolgen, da hierdurch das Meßergebnis verfälscht bzw. eine Messung verhindert wird. Druckregler die lange Zeit unter Druck stehen sind in der steuerbaren Druckstufe nicht absolut dicht. Dies ist insbesondere bei den großen Druckdifferenzen zwischen dem Eich- bzw. Prüfgasdruck von 200 bar innerhalb der Gasflasche und dem Meßdruck von 0,2 bis 0,4 bar hinter dem Druckregler der Fall. Allein durch die Permeation der Ventilkegeldichtung können unzulässig hohe Drücke in dem dem Ventilkegel nachgeschalteten Raum entstehen. Aus den oben geschilderten Gründen ist es erforderlich, die Drücke der ersten und zweiten Druckstufe des Druckreglers genau abzusichern.

Hierzu ist es bekannt, die erste Druckstufe eines Druckreglers über Leitungen und Fittings mit einem Abblaseventil und die zweite Druckstufe über Verbindungsmittel mit einem Sicherheitsventil zu verbinden.

Aus der Druckschrift "DruVa gibt der Prozeßgasversorgung im High-Tech-Bereich neue Perspektiven", Seite 6 und Seite 7, ist ein Druckregler für Reinstgase bekannt, welcher über Verbindungsmittel an Sicherheitseinrichtungen angeschlossen ist.

Aus der EP 0200543A2 ist es bekannt, eine steuerbare erste Druckstufe über Eck mit einem Verschlußventil zu verbinden. Weiterhin ist der Eingang dieses Flaschendruckreglers über einen Verbindungskanal mit einer in das Gehäuse eingeschraubten Sicherheitsvorrichtung verbunden, die im wesentlichen aus einer Berstscheibe besteht.

Nachteilig bei diesen Druckreglern ist die Vielzahl der Verschraubungen. Durch diese Verschraubungen erhöht sich eines Teils der Montage- und Herstellungsaufwand beträchtlich, andererseits werden durch die zusätzlichen Dichtungsstellen einerseits die Permeation erhöht und andererseits das Auftreten von Störpartikeln im Gasstrom begünstigt.

Weiterhin ist aus der GB-A-821,696 ein gattungsgemäßer Druckregler bekannt, der zwei Druckstufen und ein Abblaseventil aufweist, die in einem Gehäusegrundkörper angeordnet sind.

Ferner ist aus der LU-A-60 395 ein Flaschenventil bekannt, das ein Abblaseventil aufweist.

Der Erfindung liegt die Aufgabe zugrunde, die sich aus dem Stand der Technik ergebenden Nachteile zu vermeiden und einen kostengünstigen kompakten Druckregler zu schaffen, bei dem die Vielzahl der Verbindungselemente vermindert sind.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Durch die Anordnung der ersten und zweiten Druckstufe sowie des Sicherheitsventils in einer gemeinsamen horizontalen Ebene, in der der ersten Druckstufe gegenüberliegend das Sicherheitsventil und der zweiten Druckstufe gegenüberliegend der Gaseingangskanal angeordnet ist, wobei unterhalb des Gaseingangskanals das in seiner Baugröße kleinere Abblaseventil auf einer zu der horizontalen Ebene parallelen Ebene angeordnet ist, wird vorteilhaft ein besonders kompakter Aufbau des Druckreglers mit kleinen Abmessungen des Gehäusegrundkörpers erreicht. Hinzu kommt, daß in der die horizontale Ebene durchdringenden vertikalen Ebene des Gehäusegrundkörpers einerseits jeweils die Manometer angeordnet werden können und andererseits der Gasausgangskanal der zweiten Druckstufe und die Gasausgangskanäle des Sicherheits- und Abblaseventils in eine gemeinsame Seite des Gehäusegrundkörpers münden. Diese Seite ist vorzugsweise die "Unterseite" d. h. die in Richtung des Bodens weisende Seite des Druckreglers. Durch die nach unten gerichteten Gasausgangskanäle, die im Regelfall über Schlauchverbindungen mit Gasführungsschläuchen verbunden sind, kommt es im Schadensfall - beispielsweise beim Abriß des Schlauches von der Schlauchtülle - nicht zur Verletzung von Bedienungspersonen. Dies ist insbesondere beim Einsatz des Druckreglers an Gasflaschen mit stark ätzenden oder giftigen Gasen vorteilhaft.

Die mit der Erfindung erzielten Vorteile bestehen insbesondere darin, daß statt einer Vielzahl von unterschiedlichen Verbindungselementen und Gehäusegrundkörpern für die einzelnen Komponenten nur jeweils ein Gehäusegrundkörper gefertigt und montiert werden muß. Hinzu kommt, daß durch die Verringerung der Verbindungsstellen die gegenüber der Atmopsphäre abzudichtenden Übergänge verringert sind. Der Druckregler weist eine kleine Baugröße auf, die insbesondere in Verbindung mit den in Schränken angeordneten Eich- bzw. Prüfgasflaschen einer Emissionsmeßanlage vorteilhaft ist. Vorteilhafte Ausbildungen der Erfindung sind in den Unteransprüchen beschrieben.

Ein Ausführungsbeispiel der Erfindung ist in der Zeichnung dargestellt und wird im folgenden näher beschrieben.

Es zeigen:
- Fig. 1: einen Vollschnitt entlang der ersten Druckstufe und dem Sicherheitsventil durch den Druckregler nach der Erfindung;
- Fig. 2: einen Vollschnitt durch die zweite Druckstufe, den Gaseingangskanal und das Abblaseventil;
- Fig. 3: eine Vorderansicht des Druckreglers.

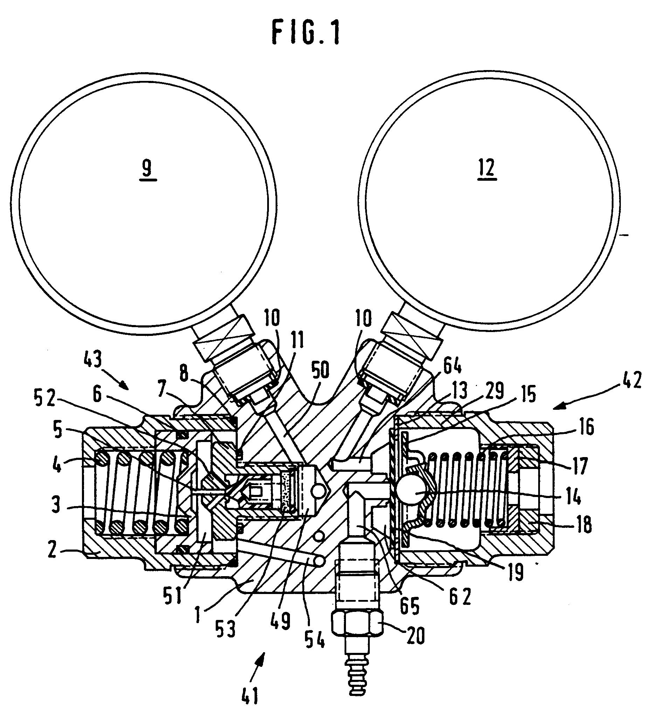

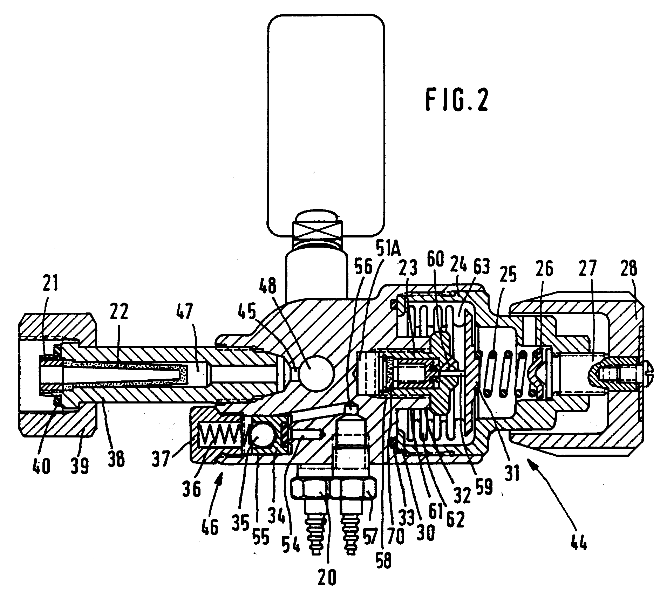

Fig. 1 zeigt den Druckregler 41, der im wesentlichen aus dem Gehäusegrundkörper 1 besteht, in welchem die erste Druckstufe 43 und dieser gegenüberliegend das Sicherheitsventil 42 angeordnet ist. Zu der ersten Druckstufe 43 und dem Sicherheitsventil 42 ist über Eck in einer gemeinsamen horizontalen Ebene die zweite Druckstufe 44 und dieser gegenüberliegend der Gaseingangskanal 45 (Fig. 2) angeordnet. Unterhalb des Gaseingangskanals 45 ist das Abblaseventil 46 auf einer zur horizontalen Ebene parallelen Ebene angeordnet.

In den Gaseingangskanal 45 ist ein Anschlußstutzen 38 mit einer Überwurfmutter 39 für den Anschluß an eine nicht näher dargestellte Gasflasche eingeschraubt. An der Stirnkante des Anschlußstutzens 38 ist eine Dichtung 40 vorgesehen, die die Verbindungsstelle des Anschlußstutzens 38 mit dem Gasflaschenanschluß gegenüber der Atmosphäre abdichtet. Über eine Zentralbohrung 47 steht der Anschlußstutzen 38 mit dem Gaseingangskanal 45 in Verbindung. Innerhalb der Zentralbohrung 47 ist eine Siebschraube 21 mit einer Siebhülse 22 angeordnet.

Über einen zu dem Gaseingangskanal 45 senkrecht verlaufenden Verbindungskanal 48 gelangt das Prüf- bzw. Eichgas in den Vordruckbereich 49 (Fig. 1) der ersten Druckstufe 43. Der Vordruckbereich 49 ist über eine Zuleitung 50 mit einem ersten Manometer 9 verbunden. Vorteilhaft ist das Manometer 9 als Kontaktmanometer ausgebildet. Die Verbindungsstelle zwischen Manometer 9 und Zuleitung 50 ist mit einer Dichtung 10 gegenüber der Atmosphäre abgedichtet.

Zwischen dem Vordruckbereich 49 und dem Zwischendruckbereich 51 ist ein Ventilsitz 7 angeordnet. Der Ventilsitz 7 weist mit einem Ventilstift 5 verschließbare Gaszwischendruck-Durchtrittsöffnungen 52 auf. Hierzu steht der Ventilstift 7 im Zwischendruckbereich 51 mit einer Kolbenstufe 3 in Verbindung. Zwischen der Oberfläche der Kolbenstufe 3 und einer in den Gehäusegrundkörper 1 eingeschraubten Druckschraube 2 ist eine Stellfeder 4 angeordnet. Über Dichtringe 6 und 8 ist die erste Druckstufe 43 gegenüber der Atmosphäre abgedichtet.

Der Ventilsitz 7 ist mit einem Dichtring 11 gegenüber dem Vordruckbereich 49 abgedichtet. Der durchmesserkleinere Teil des Ventilsitzes 7 steht über eine Gewindeverbindung mit der Bohrung des Vordruckbereiches 49 in Verbindung. Zwischen den Gaszwischendruck-Durchtrittsöffnungen 52 und dem Vordruckbereich 49 ist ein Sieb 53 vorgesehen.

Über einen mit dem Zwischendruckbereich 51 in Verbindung stehenden Verbindungskanal 54 ist die erste Druckstufe 43 mit dem Abblaseventil 46 verbunden, welches im wesentlichen aus einem innerhalb des Gehäusegrundkörpers 1 in einer Bohrung 55 angeordneten Ventilkegel 34 besteht, welcher eine Kugel 35 aufweist, die über eine Druckfeder 36 mit einer Verschlußschraube 37 in Verbindung steht. Über ein innerhalb des Gehäusegrundkörpers 1 vorgesehenen Gasausgangskanal 56 ist das Abblasesventil 46 mit einem Abgangsstutzen 57 verbunden.

Der Zwischendruckbereich 51 der ersten Druckstufe 43 ist überf einen aus den Figuren 1 und 2 nicht ersichtlichen Verbindungskanal mit der zweiten Druckstufe 44 verbunden. Der Zwischendruckbereich 51 der zweiten Druckstufe 44 ist in der Fig. 2 mit 51A gekennzeichnet.

Die zweite Druckstufe 44 besteht im wesentlichen aus einem in eine Bohrung 58 des Gehäusegrundkörpers 1 eingeschraubten Ventilsitz 23, der mit einem Ventilstift 59 verschließbare Gashinterdruck-Druchtrittsöffnungen 60 aufweist. Der Ventilstift 59 steht mit einem Faltenbalg 31 in Verbindung, welcher über eine Stellfeder 25, einem Druckstück 26 und einer Einstellschraube 27 mit einem als Handrad ausgebildeten Einstellelement 28 verbunden ist. Der Faltenbalg 31 umgibt den Ventilsitz 23, dessen durchmessergrößerer Kopf auf einem in den Hinterdruckbereich 62 hineinragenden Steg 61 aufliegt. Zwischen dem Kopf des Ventilsitzes 23 und der Stirnfläche des Steges 61 ist eine Dichtung 32 angeordnet. Der Faltenbalg 31 wird an der durchmessergrößeren Stirnfläche der Bohrung 63 des Hinterdruckbereiches 62 mit einem Haltering 30 an der Stirnseite der Bohrung 63 befestigt und mit einem in die Stirnseite eingelassenen O-Ring 33 abgedichtet. Der Haltering 30 wird über einen in die Bohrung 63 eingeschraubten Federdeckel 24 gegen die Stirnseite der Bohrung 63 und gegen den Faltenbalg 31 gedrückt. Der Federdeckel 24 dient gleichzeitig als Halterung der Einstellschraube 27.

Zwischen dem Zwischendruckbereich 51A und den Gashinterdruck-Durchtrittsöffnungen 60 ist ein Sieb 70 angeordnet. Der Hinterdruckbereich 62 ist über einen aus den Figuren 1 und 2 nicht ersichtlichen Verbindungskanal mit dem Sicherheitsventil 42 verbunden und steht über den Kanal 64 mit einem zweiten Manometer 12 in Verbindung. Das zweite Manometer 12 ist ebenso wie das erste Manometer 9 mit einer Dichtung 10 gegenüber der Atmosphäre abgedichtet. Vorteilhaft kann auch dieses Manometer 12 als Kontaktmanometer ausgebildet sein.

Das Sicherheitsventil 42 besteht im wesentlichen aus einer im Gehäusegrundkörper 1 in einer Bohrung angeordneten Membrane 19, die den Hinterdruckbereich 62 (Fig. 1) gegenüber einem Gasausgangskanal 65 abschließt, in welchen ein Abgangsstutzen 20 eingeschraubt ist. Die Membrane 19 wird mittels einer Passscheibe 13 und einer mit der Stirnseite auf die Passcheibe wirkenden Druckschraube 29 an ihren äußeren Bereichen in der Bohrung des Gehäusegrundkörpers gehalten. Auf die Membrane 19 wirkt eine Kugel 14, die Bestandteil eines Druckstückes 15 ist. Das Druckstück 15 wird mit einer Druckfeder 16 kraftbeaufschlagt. Das Gegenlager der Druckfeder 16 ist eine Einstellschraube 17, der eine Konterschraube 18 zugeordnet ist.

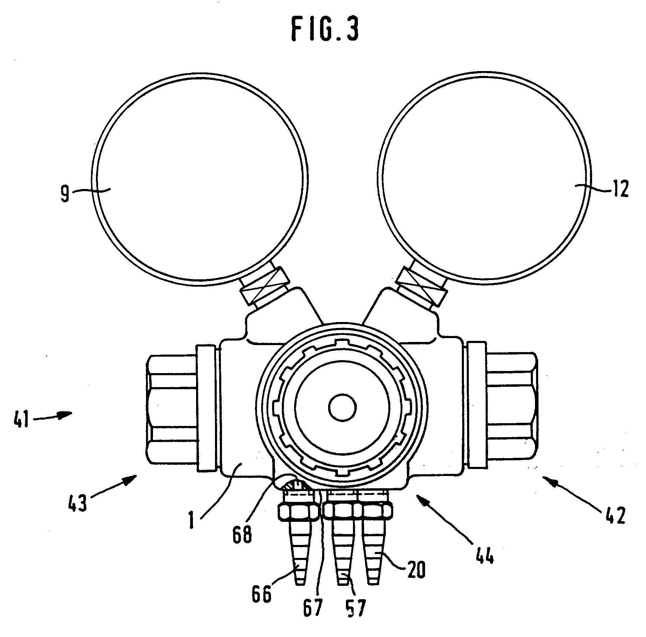

Der Hinterdruckbereich steht weiterhin über einen nicht näher dargestellten Verbindungskanal mit einem Abgangsstutzen 66 (Fig. 3) in Verbindung, der vorzugsweise mit einem Meßgerät in einer Emissionsmeßanlage verbunden ist.

Der vorstehend beschriebene Druckregler 41 arbeitet wie folgt:
Während des Betriebes wird in Abhängigkeit von dem durch die Stellfeder 4 eingestellten Zwischendruck der Durchtritt der Eich- bzw. Prüfgase über den Ventilstift 5 geregelt, der entsprechend den jeweiligen Druckdifferenzen mehr oder weniger die Gaszwischendruck-Durchtrittsöffnungen 52 freigibt oder verschließt. Wird nun aus irgendwelchen Gründen der Ventilstift mit dem anschließenden Ventilkegel zu weit geöffnet, so daß der eingestellte Druck im Zwischendruckbereich 51 überschritten wird, wird der Ventilkegel 34 des Abblaseventils 46 von seinem Ventilsitz entgegen der Kraft der Druckfeder 36 abgehoben, so daß der Überdruck über den Gasausgangskanal 56 und dem Abgangsstutzen 57 abgeführt wird. Der so auf gleichem Druck geregelte Zwischendruck wird zur zweiten Druckstufe 44 geleitet. Entsprechend der sich zwischen dem Zwischendruck und der Stellfeder 25 einstellenden Druckdifferenz wird die Gashinterdrucköffnung 60 mehr oder weniger freigegeben. Vorteilhaft ist diese Druckdifferenz über eine Veränderung der Kraft der Stellfeder 25 veränderbar.

Über diese zweite Druckstufe wird der in der ersten Druckstufe reduzierte Vordruck auf einen Druck von beispielsweise 0,2 bar reduziert und über den Abgangsstutzen 66 einem Meßgerät zugeführt. Entsteht beispielsweise aufgrund von im Gasstrom befindlichen Partikeln und einem damit verbundenen undichten Ventilsitz ein gegenüber der eingestellten Druckdifferenz erhöhter Druck, so wird die mit dem Hinterdruckbereich verbundene Membrane 19 gegen die Druckfeder 16 angehoben und der Gasausgangskanal 65 geöffnet.

Die vorteilhaft als Kontaktmanometer ausgebildeten Manometer 9 oder 12 geben bei einem vorgegebenen Flaschendruck, insbesondere bei einem erreichten unteren Flaschendruck, ein Signal an eine Überwachungsstelle ab, so daß ein Gasflaschenwechsel erfolgen kann. Selbstverständlich ist es auch vorteilhaft möglich, anstatt der Manometer 9, 12 Druckmeßumformer in den Druckregler einzudrehen. Durch diese Maßnahme wird es vorteilhaft möglich, die Flaschendruckanzeige an einem räumlich entfernten Standort anzuzeigen.

Besonders vorteilhaft ist der vorstehend beschriebene Druckregler 41, in dessen Gehäusegrundkörper 1 zwei Druckstufen 43, 44, ein Sicherheitsventil 42 und ein Abblaseventil 46 integriert sind und dessen Gasausgangskanäle 56, 65, 68 alle an einer Seite 67 des Druckreglers 41 angeordnet sind, in beengten Räumen, beispielsweise in einer in einem Schrank angeordneten Emissionsmeßanlage einsetzbar.

## Patentansprüche

1. Druckregler für Gase mit zwei Druckstufen (93, 94), die über einen Verbindungskanal miteinander verbunden sind, und die erste Druckstufe (43) mit einem Gaseingang (45) und die zweite Druckstufe (44) mit einem Gasausgang (68) in Verbindung steht, wobei der ersten Druckstufe (43) ein Abblaseventil (46) und der zweiten Druckstufe (44) ein Sicherheitsventil zugeordnet ist,
dadurch gekennzeichnet,
daß der Gaseingang (45), der Gasausgang (68), die erste und die zweite Druckstufe (43, 44) sowie das Abblaseventil (46) und das Sicherheitsventil (42) in einem gemeinsamen Gehäusegrundkörper (1) derart integriert sind, daß die erste und zweite Druckstufe (43, 44) sowie das Sicherheitsventil (42) in einer gemeinsamen ersten Ebene T-förmig angeordnet sind, daß sowohl der Gaseingang (45) und die zweite Druckstufe (44) als auch die erste Druckstufe (43) und das Sicherheitsventil (42) jeweils einander gegenüberliegend in einer Flucht angeordnet sind,
- daß das Abblaseventil (46) unterhalb des Gaseingangs (45) auf einer zur ersten Ebene parallelen zweiten Ebene angeordnet ist,
- daß der Gasausgang (68) sowie die Gasausgangskanäle (56, 65) des Abblase- bzw. Sicherheitsventils (42, 46) in eine unterhalb der ersten Ebene liegenden Unterseite (67) des Gehäusegrundkörpers (1) münden,
- und daß oberhalb der ersten Ebene gegenüberliegend der Unterseite (67) im Gehäusegrundkörper (1) Anschlüsse für Manometer (9, 12) vorgesehen sind.

2. Druckregler nach Anspruch 1,
dadurch gekennzeichnet,
daß ein erstes Manometer (9) mit dem Vordruckbereich (49) der ersten Druckstufe (43) und ein zweites Manometer (12) mit dem Hinterdruckbereich (62) der zweiten Druckstufe (44) verbunden ist.

3. Druckregler nach Anspruch 1 oder 2,
dadurch gekennzeichnet,
daß eines der Manometer (9, 12) als Kontaktmanometer ausgebildet ist und bei einem vorgegebenen Druck ein Signal erzeugt.

4. Druckregler nach einem der Ansprüche 1 bis 3,
dadurch gekennzeichnet,
daß die erste Druckstufe (43) einen in eine Bohrung des Gehäusegrundkörpers (1) eingeschraubten Ventilsitz (7) enthält, der mit einem Ventilstift (5) verschließbare Gaszwischendruck-Durchtrittsöffnungen (52) aufweist, wobei der Ventilstift (7) mit einer federbelasteten Kolbenstufe (3, 4) in Verbindung steht.

5. Druckregler nach einem der Ansprüche 1 bis 4,
dadurch gekennzeichnet,
daß die zweite Druckstufe (44) einen in eine Bohrung des Gehäusegrundkörpers (1) eingeschraubten Ventilsitz (23) enthält, der mit einem Ventilstift (59) verschließbare Gashinterdruck-Durchtrittsöffnungen (60) aufweist, wobei der Ventilstift (59) mit einem federbelasteten Faltenbalg (31, 25) in Verbindung steht.

6. Druckregler nach einem der Ansprüche 1 bis 5,
dadurch gekennzeichnet,
daß in Strömungsrichtung vor den Ventilstiften jeweils ein Sieb (53, 70) angeordnet ist.

7. Druckregler nach einem der Ansprüche 1 bis 6,
dadurch gekennzeichnet,
daß das Sicherheitsventil (42) eine im Gehäusegrundkörper (1) in einer Bohrung angeordnete von einer Druckfeder (16) beaufschlagte Membrane (19) enthält, die den Hinterdruckbereich (62) gegenüber dem Gasausgangskanal (65) abschließt und die Druckfeder (16) mit einem Einstellelement (28) in Verbindung steht.

8. Druckregler nach einem der Ansprüche 1 bis 7,
dadurch gekennzeichnet,
daß das Abblaseventil (46) einen innerhalb des Gehäusegrundkörpers (1) in einer Bohrung angeordneten federbelasteten Ventilkegel (34, 36) aufweist, mit dem der Gasausgangskanal (56) verschließbar ist.

## Claims

1. Pressure regulator for gases, comprising two pressure stages (43, 44) which are linked together via a connecting channel, and the first pressure stage (43) is in communication with a gas inlet (45) and the second pressure stage (44) is in communication with a gas outlet (68), a relief valve (46) being assigned to the first pressure stage (43) and a safety valve being assigned to the second pressure stage (44), characterised in that the gas inlet (45), the gas outlet (68), the first and the second pressure stages (43, 44), and the relief valve (46) and the safety valve (42) are integrated in a common main housing body (1) in such a way that the first and second pressure stages (43, 44) and the safety valve (42) are disposed in a T-shaped fashion in a common first plane, in that not only the gas inlet (45) and the second pressure stage (44) but also the first pressure stage (43) and the safety valve (42) are in each case disposed opposite one another in one row,
- in that the relief valve (46) is disposed underneath the gas inlet (45) in a second plane parallel to the first plane,
- in that the gas outlet (68) and the gas outlet channels (56, 65) of the relief and safety valves (42, 46), respectively, open into an underside (67), situated underneath the first plane, of the main housing body (1),
- and in that connections for manometers (9, 12) are provided in the main housing body (1) above the first plane situated opposite the underside (67).

2. Pressure regulator according to Claim 1, characterised in that a first manometer (9) is linked to the admission pressure region (49) of the first pressure stage (43) and a second manometer (12) is linked to the back-pressure region (62) of the second pressure stage (44).

3. Pressure regulator according to Claim 1 or 2, characterised in that one of the manometers (9, 12) is designed as contact-making manometer and generates a signal at a predetermined pressure.

4. Pressure regulator according to one of Claims 1 to 3, characterised in that the first pressure stage (43) contains a valve seat (7) which is screwed into a bore in the main housing body (1) and which has gas intermediate-pressure passage openings (52) which can be sealed by a valve pin (5), the valve pin (7) being in communication with a spring-loaded piston stage (3, 4).

5. Pressure regulator according to one of Claims 1 to 4, characterised in that the second pressure stage (44) contains a valve seat (23) which is screwed into a bore in the main housing body (1) and which has gas back-pressure passage openings (60) which can be sealed by a valve pin (59), the valve pin (59) being in communication with a spring-loaded bellows (31, 25).

6. Pressure regulator according to one of Claims 1 to 5, characterised in that a screen (53, 70) is in each case disposed upstream of the valve pins in the direction of flow.

7. Pressure regulator according to one of Claims 1 to 6, characterised in that the safety valve (42) contains a membrane (19) which is disposed in a bore in the main housing body (1) and is acted on by a compression spring (16) and which seals the back-pressure region (62) from the gas outlet channel (65), and the compression spring (16) is in communication with an adjustment element (28).

8. Pressure regulator according to one of Claims 1 to 7, characterised in that the relief valve (46) has a spring-loaded valve cone (34, 36) which is disposed in a bore inside the main housing body (1) and by means of which the gas outlet channel (56) can be sealed.

## Revendications

1. Régulateur de pression de gaz à deux étages de pression (93, 94) reliés par un canal de liaison, le premier étage (43) communiquant avec une entrée de gaz (45) et le second étage de pression (44) communiquant avec une sortie de gaz (68), le premier étage de pression (43) comportant une soupape d'évacuation (46) et le second étage de pression (44) une soupape de sécurité, caractérisé en ce que : l'entrée de gaz (45), la sortie de gaz (68), le premier et le second étage de pression (43, 44) ainsi que la soupape d'évacuation (46) et la soupape de sécurité (42) sont intégrés dans un même corps de base (1) de façon que le premier étage et le second étages de pression (43, 44) ainsi que la soupape de sécurité (42) se trouvent dans un premier plan, commun, selon une disposition en T, pour qu'à la fois l'entrée de gaz (45) et le second étage de pression (44) de même que le premier étage de pression (43) et la soupape de sécurité (42) soient à chaque fois alignés en opposition,
- la soupape d'évacuation (46) se trouvant sous l'entrée de gaz (45) dans un second plan parallèle au premier plan,
- la sortie de gaz (68) ainsi que les canaux de sortie de gaz (56, 65) de la soupape d'évacuation et de la soupape de sécurité (42, 46) débouchant dans la face inférieure (67) du corps de base (1) en-dessous du premier plan,
- et en ce qu'au-dessus du premier plan en regard du côté inférieur (67), le corps de base (1) comporte des branchements pour les manomètres (9, 12).

2. Régulateur de pression selon la revendication 1, caractérisé par un premier manomètre (9) avec une plage de pression amont (49) pour le premier étage de pression (43) et un second manomètre (12) avec une plage de pression arrière (62) pour le second étage de pression (44).

3. Régulateur de pression selon la revendication 1 ou 2, caractérisé en ce que l'un des manomètres (9, 12) est un manomètre à contact qui génère un signal pour une pression prédéterminée.

4. Régulateur de pression selon l'une des revendications 1 à 3, caractérisé en ce que le premier étage de pression (43) comporte une soupape (7) vissée dans un perçage du corps de base (1), cette soupape comportant des ouvertures de passage de gaz à la pression intermédiaire (52) susceptibles d'être fermées par une aiguille de soupape (5), le siège de soupape coopérant avec un piston étagé (3, 4) chargé par ressort.

5. Régulateur de pression selon l'une des revendications 1 à 4, caractérisé en ce que le second étage de pression (44) comporte un siège de soupape (23) vissé dans un perçage du corps de base (1), ce siège ayant des ouvertures de passage pour le gaz à la pression arrière, susceptibles d'être fermées par une aiguille de soupape (59), cette aiguille (59) étant reliée à un soufflet (31, 25) chargé par un ressort.

6. Régulateur de pression selon l'une des revendications 1 à 5, caractérisé en ce que les aiguilles de soupape sont précédées chaque fois en amont dans le sens de l'écoulement par un tamis (53, 70).

7. Régulateur de pression selon l'une des revendications 1 à 6, caractérisé en ce que la soupape de sécurité (42) comporte une membrane (19) prévue dans un perçage du corps de base (1), cette membrane étant soumise à l'action d'un ressort de compression (16), et cette membrane ferme la zone de pression arrière (62) par rapport au canal de sortie de gaz (65), le ressort de pression (16) étant relié à un élément de réglage (28).

8. Régulateur de pression selon l'une des revendications 1 à 7, caractérisé en ce que la soupape d'évacuation (46) comporte un cône de soupape (34, 36) chargé par ressort placé dans un perçage du corps de base (1), et qui peut fermer le canal de sortie de gaz (56).
